# EUROPÄISCHE PATENTSCHRIFT

(11) **EP 2 036 621 B1**
(45) Veröffentlichungstag und Bekanntmachung des Hinweises auf die Patenterteilung: **15.08.2012**
(21) Anmeldenummer: 08157611.8
(22) Anmeldetag: 04.06.2008
(51) Int. Cl.: B07C 5/16, G01G 19/414

(54) **Vorrichtung zur Verarbeitung von Postsendungen mit Wiegeeinrichtung**
Device for processing mail with scales device
Dispositif de traitement d'envois postaux avec dispositif de pesage

(30) Priorität: 17.09.2007 DE 102007044419
(43) Veröffentlichungstag der Anmeldung: 18.03.2009
(73) Patentinhaber: Bell and Howell, LLC, Durham, NC 27713 (US)
(72) Erfinder: Hahn, Wilfried, 64285 Darmstadt (DE)
(74) Vertreter: Braun-Dullaeus, Karl-Ulrich

(56) Entgegenhaltungen:
- DE-A1- 3 821 106
- DE-A1- 19 604 090

## Beschreibung

Die Erfindung betrifft eine Vorrichtung zur Verarbeitung von Postsendungen, insbesondere von flachen Postsendungen wie Briefen, die auf einer Transportstrecke in einem Strom von Sendungen ("Sendungsstrom") transportiert werden, wobei die Vorrichtung eine über die Transportstrecke zugängliche Wiegeeinrichtung umfasst, wobei die Wiegeeinrichtung eine Verteilereinrichtung aufweist, die den Strom der Postsendungen auf Teilpfade verteilt, wobei nach einer Wiegung von Postsendungen die Teilpfade im weiteren Verlauf über eine Vereinigungseinrichtung wieder zusammengeführt werden. Die Erfindung betrifft ebenso ein Wiegemodul zum Einsatz in einer solchen Vorrichtung.

In derartigen Vorrichtungen werden insbesondere Briefe verschiedener Formate und Postkarten in einem kontinuierlichen Sendungsstrom verarbeitet. Um das notwendige Porto oder um Entgelte für die Verarbeitung zu bestimmen, wird das Gewicht der einzelnen Postsendungen ermittelt, wobei die Postsendungen zu diesem Zwecke über eine Wiegeeinrichtung geführt werden. Dabei darf der Sendungsstrom nicht merklich verzögert oder gar gestoppt werden. Bei derzeit laufenden Anlagen ist zu gewährleisten, dass die Wiegung trotz hoher Sendungsströme von bis zu 50.000 Postsendungen pro Stunde zuverlässig durchgeführt wird. Die bislang in den Wiegeeinrichtungen eingesetzten Waagen sind jedoch prinzipiell in ihrer Wiegefrequenz begrenzt, da sie erst ausschwingen müssen, bevor sie eine neue Postsendung präzise wiegen können. Zudem sind die Vorrichtungen auch so auszulegen, dass die Postsendungen bei Bandgeschwindigkeiten von mehr als zwei Meter pro Sekunde nicht beschädigt werden.

Aus der DE 196 04 090 A1 ist eine derartige Vorrichtung zur automatischen Gewichtsbestimmung von Postsendungen bekannt, bei der die Transportstrecke an einer Verteilereinrichtung in zwei oder mehr parallele Wiegestrecken aufgeteilt wird, wobei in jeder der Wiegestrecken eine Waage vorgesehen ist, so dass jede Waage nur den entsprechenden Teil der Menge an Postsendungen zu bewältigen hat. Auf diese Weise können Wiegungen an einem kontinuierlichen Sendungsstrom hoher Geschwindigkeit mit großer Präzision vorgenommen werden. Dadurch, dass aus dem Sendungsstrom beispielsweise nur jede zweite Postsendung von einer Waage gewogen werden muss, hat die einzelne Waage mehr Zeit, um sich nach Abnahme der Postsendung wieder zu beruhigen und sich auf die nächste Wiegung vorzubereiten. Dabei wird durch die besondere in der DE 196 04 090 A1 offenbarte Schaltung der Antriebe gewährleistet, dass eine Verschiebung der relativen Position der Postsendungen zueinander im Sendungsstrom vermieden wird.

Aufgabe der vorliegenden Erfindung ist es nunmehr, eine solche Vorrichtung bezüglich ihres Bauraumes und ihrer Flexibilität zu optimieren, ohne die Präzision der Wiegungen bei hoher Geschwindigkeit und Dichte des Sendungsstromes zu beeinträchtigen. Zudem ist es Aufgabe der Erfindung, ein Wiegemodul zu schaffen, das bei besonders einfachem Aufbau eine Erweiterung der Verarbeitungsvorrichtungen zum Zwecke der weiteren Erhöhung des Durchsatzes ermöglicht.

Diese Aufgaben werden durch die Vorrichtung mit dem kennzeichnenden Merkmal des Anspruchs 1 gelöst. Merkmale besonderer Ausführungsformen der Erfindungen sind in den jeweiligen Unteransprüchen genannt.

Ein besonderer Erfindungsgedanke liegt zunächst darin, den Strom von Sendungen in zwei Teilpfade aufzuteilen, die einer Wiegeeinrichtung zuzuordnen sind, wobei erfindungsgemäß nur einer dieser Teilpfade mit einer Waage ausgestattet ist und nachfolgend als Wiegestrecke bezeichnet wird, während der andere Teilpfad als reine Umgehung ("Bypass") ausgebildet ist. Mit einer Waage "ausgestattet" bedeutet dabei, dass die Postsendung auf diesem Teilpfad über eine Waage geführt wird, wobei als Waagen die aus dem Stand der Technik bekannten Waagen herhalten können. Der Bypass hingegen führt an der Waage vorbei, gegebenenfalls auch darüber oder darunter hinweg, ohne dass eine Wiegung stattfindet. Somit werden die über den ersten Teilpfad geführten Postsendungen gewogen, während die über den Bypass geführten zumindest zunächst ungewogen bleiben. Mit den nicht gewogenen Postsendungen, die dem Sendungsstrom nach der Wiegestrecke wieder zugeführt werden, kann nach Belieben verfahren werden. Vorteilhafterweise werden sie jedoch später ebenfalls einer insbesondere ebensolchen mit Waage und Bypass ausgestatteten Wiegeeinrichtung zugeführt. Entsprechend können dann die schon gewogenen Postsendungen über einen Bypass an der zweiten Waage vorbei geführt werden.

Im Zusammenhang mit dieser Anmeldung wird mit dem Terminus "Wiegeeinrichtung" ein Teil einer Vorrichtung zur Verarbeitung von Postsendungen bezeichnet, das mindestens zwei parallele Teilpfade aufweist, wobei entsprechend der Erfindung einer der Teilpfade als Wiegestrecke mit einer Waage ausgestattet ist, während der andere Teilpfad den Bypass bildet.

Vorteilhafterweise werden die Postsendungen, insbesondere die Briefsendungen, wie aus dem Stand der Technik bekannt, zwischen angetriebenen Führungsriemen geklemmt und auf einer Kante aufstehend über die Transportstrecke bewegt. Solcherart geklemmt können sie auch über eine Waage geführt werden, wobei die Klemmung auf der Waage im Bezugssystem der Waage stattfinden muss, um die Wiegung nicht zu verfälschen. Dazu ist auf der Waage eine eigene Führung mit Antrieb vorgesehen. Der Antrieb der Führungsriemen geschieht jeweils über Antriebswalzen, deren Steuerung je nach dem mehr oder weniger unabhängig vorzusehen ist.

Der besondere Vorteil dieser erfindungsgemäßen Wiegeeinrichtung liegt zum einen darin, dass diese mit vergleichsweise kleiner Breite gebaut werden kann, da an der breiten Waage nur ein schmaler Bypass und keine zweite Waage vorbei geführt werden muss. Dieser Raumvorteil spielt bei den über ihre gesamte Länge verhältnismäßig schmalen Vorrichtungen zur Verarbeitung von Postsendungen eine erhebliche Rolle, da so die Zugänglichkeit der einzelnen Abschnitte für das Personal verbessert und das Raumerfordernis in der Breite vermindert wird. Der Einsatz der erfindungsgemäßen Wiegeeinrichtung trägt somit zu einer "ergonomischen" und "ökonomischen" Gestaltung der Gesamtvorrichtung bei.

Ein weiterer bemerkenswerter Vorteil liegt darin, dass die Gesamtvorrichtung je nach dem zu erwartenden Durchsatz ohne besondere bauliche Maßnahmen mit mehreren solcher Wiegeeinrichtungen, die hintereinander zu schalten sind, ausgestattet werden kann. In diesem Fall befindet sich in Stromrichtung hinter der Vereinigungseinrichtung in der Transportstrecke eine zweite Verteilereinrichtung, die den Strom der Postsendungen wiederum auf eine Wiegestrecke mit einer zweiten Waage und einen zweiten Bypass aufteilt. Dasselbe gilt auch für weitere Wiegeeinrichtungen. Auf diese Weise können im Prinzip Sendungsströme nahezu beliebiger Geschwindigkeit und Dichte verarbeitet werden. Durch Hintereinanderschalten mehrerer solcher mit Bypass versehener Wiegeeinrichtungen ist eine Erhöhung der Ströme von über 50.000 Postsendungen pro Stunde mit Geschwindigkeiten von mehr als 2 m/sec problemlos möglich. Die Wiegeeinrichtung ist mit einem solchen Durchsatz auf keinen Fall mehr das "Nadelöhr", das den Sendungsstrom hemmt.

In diesem Sinne ist es ganz besonders vorteilhaft, wenn die Wiegeeinrichtung als flexibel einsetzbares und mit anderen Einheiten zusammenschaltbares Wiegemodul ausgebildet wird. Dieses Wiegemodul zeichnet sich durch eine kompatible "Schnittstelle" aus, an der der Sendungsstrom von einer im Strom davor liegenden Einheit an das Wiegemodul übergeben wird. Nach der Schnittstelle, die gewissermaßen den Eingang zum Wiegemodul bildet, zweigt ein erster Teilpfad aus der Transportstrecke ab, der über eine Waage zur automatischen Gewichtsbestimmung der Postsendungen führt. Ein zweiter Teilpfad führt als Bypass an der Waage vorbei. Die kompatible Schnittstelle wird über die Anordnung der Führungsriemen realisiert, die ein Hintereinanderschalten zweier identischer Wiegemodule ermöglicht. Dabei sind Steuermittel zur Ansteuerung der Verteilereinrichtungen vorzusehen, um die mittels der ersten Wiegeeinrichtung gewogenen Postsendungen zu erkennen und dem zweiten Bypass zuzuführen oder vice versa.

Um zu Erreichen, dass der Strom von Postsendungen, der über hintereinander geschaltete Bypässe läuft, möglichst kontinuierlich ist, ist es vorteilhaft, wenn der mit der Waage versehene Teilpfad aus der geradeaus verlaufenden Transportstrecke seitlich ausgelenkt wird, während der Bypass geradeaus weiterführt. Damit kann eine einzelne Postsendung ohne aus der geradlinigen Transportstrecke herausgelenkt zu werden über Bypässe an mehreren Wiegeeinrichtigjungen vorbeigeführt werden, bevor sie letztendlich in einem abzweigenden Teilpfad gewogen wird.

Hingegen kann es insbesondere beim Einsatz hintereinander angeordneter Wiegemodule vorteilhaft sein, die Waage in einem geraden Teilpfad vorzusehen, um die Wiegung nicht mit der zeitweilig etwas höheren Geschwindigkeit, die über den längeren Teilpfad nötig wäre, zu erschweren. In dieser Ausführungsform bildet der Bypass den die Waage umgehenden und damit längeren Teilpfad, der jedoch für eine Erhöhung der Geschwindigkeit nicht sensibel ist. Die Steuerung des Bypass kann dabei unabhängig von der des mit Waage ausgestatteten Teilpfades geschehen. Bei modulartigem Aufbau ist es bei dieser Gestaltung vorteilhaft, wenn die hintereinander angeordneten Module in dem Sinne "spiegelbildlich" angeordnet sind, als der Bypass zunächst rechts um die Wiegestrecke herum führt, während er beim nachfolgenden Modul links herum führt. Auf diese Weise wird ein kritischer V-förmiger Knick in der Führung der Postsendungen vermieden, der an der Schnittstelle auftreten kann, wenn von der Vereinigungseinrichtung des ersten Wiegemoduls unmittelbar in die Verteilereinrichtung des nächsten Wiegemoduls führt. Diese Anordnung von Wiegemodule führt zu einer Verringerung der Baulänge, da auf längere gerade Transportstrecken an den Enden der Wiegemodule verzichtet werden kann.

In einer anderen Ausführungsform kann es von Vorteil sein, die Wiegestrecke und den Bypass gleich lang zu machen, um einen vereinheitlichten Antrieb beider Strecken zu ermöglichen. Dieser Aufbau führt allerdings gegenüber den oben beschriebenen zu einer gewissen Verbreiterung der gesamten Vorrichtung, wobei die gesamte Breite immer noch geringer ist, als die zweier nebeneinander angeordneter Waagen.

Nachfolgend wird die Erfindung anhand der Figuren 1 bis 4 näher erläutert. Es zeigen:
- **Figur 1:**: Eine Vorrichtung zur Verarbeitung von Postsendungen mit zwei hintereinander angeordneten Wiegeeinrichtungen, aufweisend gerade verlaufende Bypässe,
- **Figur 2:**: eine solche Vorrichtung mit zwei hintereinander angeordneten Wiegeeinrichtungen mit gleich langen Teilpfaden,
- **Figur 3:**: zwei hintereinander angeordnete Wiegemodule und
- **Figur 4:**: eine Waage

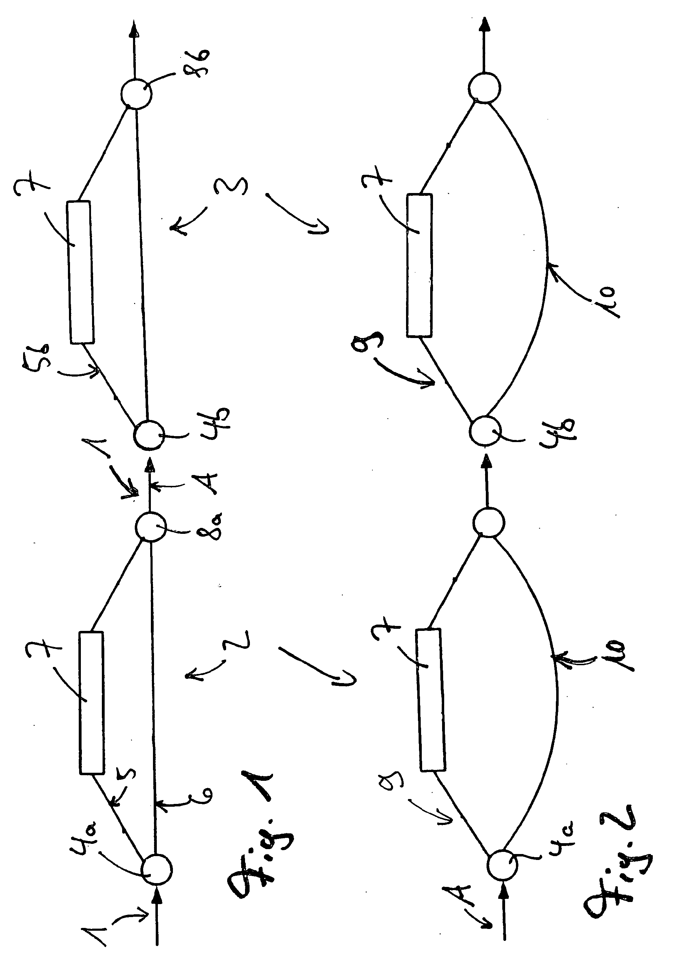

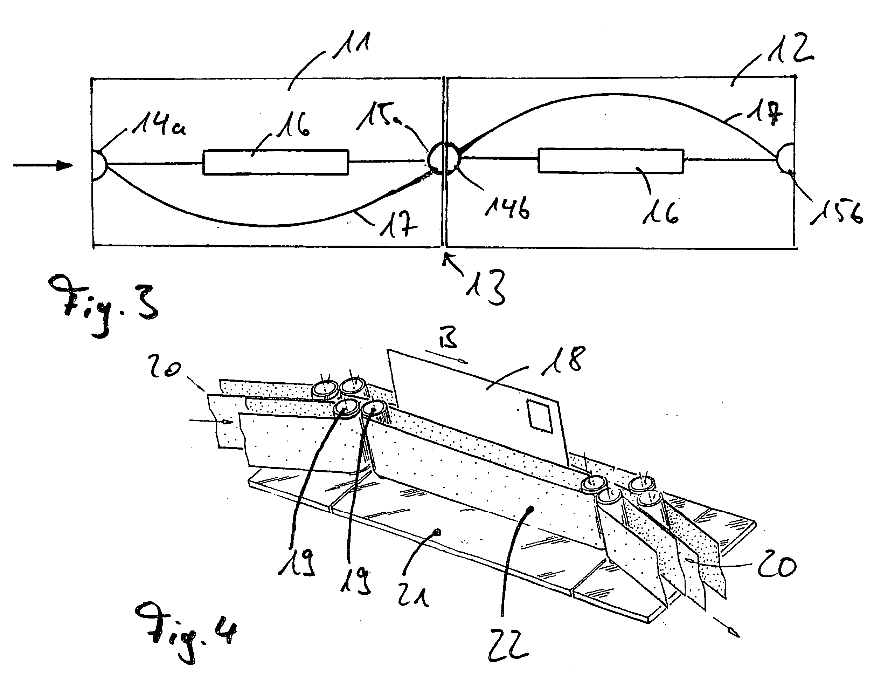

Figur 1 zeigt auf schematische Weise einen Teil einer Vorrichtung zur Verarbeitung von Postsendungen, wie beispielsweise von Briefsendungen, die auf einer Transportstrecke 1 in einem Sendungsstrom transportiert werden. Die gezeigte Vorrichtungen umfasst zwei über die Transportstrecke 1 zugängliche Wiegeeinrichtungen 2 und 3, die jeweils an einer Verteilereinrichtung 4 beginnen. Die Verteilereinrichtung 4a, 4b verteilt den Sendungsstrom auf zwei Teilpfade 5 und 6, wobei in einem ersten der Teilpfade 5 eine Waage 7 zur automatischen Gewichtsbestimmung der Postsendungen vorgesehen ist. Der zweite Teilpfad 6 ist als Bypass ausgebildet, der die Waage 7 umgeht. Im Bypass 6 findet keine Wiegung statt. Nach der Wiegung werden die Teilpfade über eine Vereinigungseinrichtung 8a wieder in der gemeinsamen Transportstrecke 1 zusammengeführt. Die Führung der insbesondere Briefsendungen kann, wie in Figur 4 gezeigt, durch Führungsriemen geschehen, mit denen diese auf einer Kante stehend auf der Transportstrecke transportiert werden.

In diesem Fall wird der mit der Waage 7 versehene Teilpfad 5 aus der gerade verlaufenden Transportstrecke 1 seitlich ausgelenkt, während der Bypass 6 geradeaus weiter führt. Dementsprechend ist diese Wiegestrecke 5 etwas länger als der Bypass 6, so dass die Geschwindigkeit entsprechend erhöht werden muss, um an der Vereinigungseinrichtung 8 die Postsendung wieder an ihrer alten Position in den Sendungsstrom einzubringen. Die Vereinigungseinrichtung 8 ist daher so ausgelegt, dass sie die etwas höhere Geschwindigkeit in der Wiegestrecke auf die Höhe der ursprünglichen Geschwindigkeit abbremst.

Nachdem die gewogenen Postsendungen an der Vereinigungseinrichtung 8 wieder mit dem Strom der ungewogenen vereint wurden, treffen sie auf die zweite Verteilereinrichtung 4b, wo die bislang ungewogenen Postsendungen ausgekoppelt und über die Wiegestrecke 5b geführt werden. In Stromrichtung (Pfeil A) hinter der Vereinigungseinrichtung 8a befindet sich in der Transportstrecke somit die zweite Verteilereinrichtung 4b, die den Strom der Postsendungen wiederum auf einen Teilpfad 5b mit einer zweiten Waage und einen zweiten Bypass 6b aufteilt.

In Figur 2 ist ein Schema gezeigt, das dem in Figur 1 gezeigten im Prinzip gleicht. In diesem Fall haben jedoch die mit der Waage versehene Wiegestrecke 9 und der Bypass 10 dieselbe Länge, so dass beide Pfade über einen gekoppelten Antrieb gesteuert werden können. Um die Länge der Wiegestrecke zu erreichen, ist der Bypass 10 in einem Bogen geführt.

Zur Ansteuerung der Verteilereinrichtungen 4a und 4b sind nicht dargestellte Steuermittel vorhanden, um die Postsendungen auf den richtigen Pfad zu bringen und insbesondere um die mittels der ersten Wiegeeinrichtung gewogenen Postsendungen dem zweiten Bypass zuzuführen.

Die in den Figuren 1 und 2 gezeigten Schemata lassen sich auch durch zwei hintereinander geschaltete Module realisieren. Eine Abfolge zweier identischer aber spiegelbildlich angeordneter Module zeigt Figur 3, wobei die Module 11 und 12 durch Rechtecke angedeutet sind, die über eine Schnittstelle 13 gekoppelt sind. Die Schnittstelle 13 gewährleistet einerseits die mechanische Kopplung, sie koppelt aber auch die Führungen. Dazu sind die Verteilereinrichtungen 14a und 14b, sowie die Vereinigungseinrichtungen 15a und 15b in diesem Fall so ausgebildet, dass sie unmittelbar aneinander stoßen. Somit befindet sich unmittelbar am Beginn der auf dem Wiegemodul realisierten Transportstrecke eine Verteilereinrichtung, an deren unmittelbaren Ende die Vereinigungseinrichtung angeordnet ist. Anfang und Ende der Module könnten auch mit einem Stück gerader Transportstrecke realisiert sein, doch lässt sich auf die in Figur 3 gezeigte Weise Baulänge einsparen.

Wie ersichtlich, haben auch die Wiegemodule 11 und 12 einen Teilpfad mit einer Waage 16 zur automatischen Gewichtsbestimmung der Postsendungen, und einen zweiten Teilpfad, der als Bypass 17 an der Waage 16 vorbei führt. Die Anordnung der Führungsriemen ermöglicht das Hintereinanderschalten der beiden identischen Wiegemodule. In dem gezeigten Beispiel wird der Bypass 17 aus der Transportstrecke ausgelenkt, während der mit Waage 16 versehene Teilpfad geradeaus weiter führt. Wie oben dargelegt, sind die Module spiegelbildlich angeordnet, wobei die Grundplatte identisch und um 180° gedreht angeordnet ist. Auf diese weise kann die eine Postsendung gewissermaßen geradlinig von Bypass zu Bypass geführt werden, ohne dass es zu einem Knick in der Führungsstrecke kommt.

Figur 4 zeigt das Prinzip der Führung über die Transportpfade vermittels Führungsriemen, die ein Deckbandsystem realisieren, bei dem ein Brief 18 zwischen zwei über Antriebswalzen 19 laufenden Führungsriemen 20 geklemmt wird. Dabei zeigt Figur 4 den Übergang auf eine Waage, die unter der Platte 21 angeordnet ist. Die Führung auf der Waage findet zwischen einem Paar separater Führungsriemen 22 statt, die auf der Platte 21 und damit im Bezugssystem der Waage gehalten sind. So ist eine exakte Wiegung des Briefes möglich. Die Bewegungsrichtung wird durch den Pfeil B angedeutet. Da die Waagen nicht in beiden Bewegungsrichtungen funktionieren, ist es vorteilhaft, diese so zu konzipieren, dass sie sich leicht um 180° drehen lassen.

## Patentansprüche

1. Vorrichtung zur Verarbeitung von Postsendungen (18), insbesondere von Briefsendungen, die auf einer Transportstrecke (1) in einem Sendungsstrom transportiert werden, wobei die Vorrichtung eine über die Transportstrecke (1) zugängliche Wiegeeinrichtung (7,16) umfasst, wobei die Wiegeeinrichtung (7,16) eine Verteilereinrichtung (4,14) aufweist, die den Strom der Postsendungen auf Teilpfade (5,6) verteilt, wobei nach einer Wiegung von Postsendungen die Teilpfade (5,6) im weiteren Verlauf über eine Vereinigungseinrichtung (8,15) wieder zusammengeführt werden,
**dadurch gekennzeichnet,**
**dass** in einem ersten der Teilpfade (5) eine Waage (7,16) zur automatischen Gewichtsbestimmung der Postsendungen (18) vorgesehen ist,
**dass** ein zweiter Teilpfad als Bypass (6,10,17) ausgebildet ist, der die Waage (7,16) umgeht, wobei im Bypass (6,10,17) keine Wiegung stattfindet.

2. Vorrichtung nach Anspruch 1,
**dadurch gekennzeichnet,**
**dass** der mit der Waage (7,16) versehene Teilpfad (5) aus der gerade verlaufenden Transportstrecke (1) seitlich ausgelenkt wird, während der Bypass (6,10,17) geradeaus weiter führt.

3. Vorrichtung nach Anspruch 1 oder 2,
**dadurch gekennzeichnet,**
**dass** der mit der Waage (7,16) versehene Teilpfad (5) und der Bypass (6,10,17) dieselbe Länge haben.

4. Vorrichtung nach einem der vorherigen Ansprüche,
**gekennzeichnet durch**
Mittel, insbesondere Führungsriemen (20), mit denen die Briefsendungen auf einer Kante stehend auf der Transportstrecke (1) transportiert werden.

5. Vorrichtung nach einem der vorherigen Ansprüche,
**dadurch gekennzeichnet,**
**dass** in Stromrichtung hinter der Vereinigungseinrichtung (8,15) sich in der Transportstrecke eine zweite Verteilereinrichtung (4,14) befindet, die den Strom der Postsendungen wiederum auf einen Teilpfad mit einer zweiten Waage (7,16) und einen zweiten Bypass (6,10,17) aufteilt.

6. Vorrichtung nach Anspruch 5,
**gekennzeichnet durch**
Steuermittel zur Ansteuerung der Verteilereinrichtung, um die mittels der ersten Wiegeeinrichtung gewogenen Postsendungen dem zweiten Bypass (6,10,17) zuzuführen.

7. Vorrichtung nach einem der vorherigen Ansprüche,
**gekennzeichnet durch**
von Antrieben angetriebene Führungsriemen, zwischen denen die Postsendungen, insbesondere die Briefsendungen, festgeklemmt auf einer Kante stehend über die Transportstrecke und die darin befindlichen Teilpfade bewegt werden.

8. Vorrichtung nach einem der vorherigen Ansprüche,
**dadurch gekennzeichnet,**
**dass** die Antriebe derart geschaltet sind, dass zwei parallele Teilpfade (9,10) in derselben Zeit durchlaufen werden.

9. Vorrichtung nach einem der vorherigen Ansprüche,
**gekennzeichnet durch**, ein Wiegemodul, welches den ersten Teilpfad (5,9), den zweiten Teilpfad, sowie eine Anordnung von Führungsriemen, die ein Hintereinanderschalten zweier identischer Wiegemodule ermöglicht, umfasst.

10. Vorrichtung nach Anspruch 9,
**gekennzeichnet durch**
eine unmittelbar am Beginn der auf dem Wiegemodul realisierten Transportstrecke befindliche Verteilereinrichtung (14) und eine unmittelbar am Ende der auf dem Wiegemodul realisierten Transportstrecke befindliche Vereinigungseinrichtung (15).

11. Vorrichtung nach Anspruch 10,
**dadurch gekennzeichnet,**
**dass** der Bypass (6,10,17) aus der gerade verlaufenden Transportstrecke ausgelenkt wird, während der mit Waage versehene Teilpfad geradeaus weiter führt.

12. Vorrichtung nach Anspruch 11,
**dadurch gekennzeichnet,**
**dass** die Grundplatte identisch und um 180° gedreht angeordnet ist, so dass eine Postsendung geradlinig von Bypass zu Bypass geführt werden kann.

## Claims

1. Apparatus for the handling of postal items (18), in particular letters, which are transported on a transport line (1) in a stream of items,
wherein the apparatus comprises a weighing device (7, 16) accessible via the transport line (1), wherein the weighing device (7, 16) comprises a distribution device (4, 14), which distributes the stream of items onto sub-paths (5, 6), wherein after a weighing of postal items the sub-paths (5,6) are in the further course merged together via a merging device (8, 15),
**characterized in**
**that** in a first one of the sub-paths (5) a scale is provided for the automatic gravimetry of the postal items (18),
**that** a second one of the sub-paths (6) is designed as a bypass (6, 10, 17), which circumvents the scale (7, 16), wherein in the bypass (6, 10, 17) no weighing is performed.

2. Apparatus according to claim 1,
**characterized in**
**that** the sub-path (5) provided with the scale (7, 16) is deflected sidewards from the straight lined transport line (1), while the bypass (6, 10, 17) continues straight.

3. Apparatus according to claim 1 or 2,
**characterized in**
**that** the sub-path (5) provided with the scale (7, 16) and the bypass (6, 10, 17) have same length.

4. Apparatus according to one of the preceding claims,
**characterized in**
means, in particular guide belts (20), which transport the postal items on the transport line (1) standing on an edge.

5. Apparatus according to one of the preceding claims,
**characterized in**
**that** afterwards in direction of stream of the merging device (8, 15) a second distribution device (4, 14) is arranged, which distributes the stream of items again onto a sub-path comprising a scale (7, 16) and a second bypass (6, 10, 17).

6. Apparatus according to claim 5,
**characterized in**
control means for controlling the distribution device, to feed the postal items, weighted by the first weighing device, to the second bypass (6, 10, 17).

7. Apparatus according to one of the preceding claims,
**characterized in**
guide belts driven by drives, between which the postal items, in particular mail items, are being moved along the transport line and the therein arranged sub-paths in a clamped manner and standing on an edge.

8. Apparatus according to one of the preceding claims,
**characterized in**
**that** the drivers are controlled in a manner, that two separate sub-paths (9, 10) are run through at the same time.

9. Apparatus according to one of the preceding claims,
**characterized in**
a weighing module, comprising the first sub-path (5, 6), the second sub-path, and a configuration of guide belts, which enable an arrangement in sequence of two identical weighing modules.

10. Apparatus according to claim 9,
**characterized in**
a distribution device (14), which is directly located at the beginning of the transport line realized on the weighing module, and a merging device (15), which is directly located at the end of the transport line arranged on the weighing module.

11. Apparatus according to claim 10,
**characterized in**
**that** the bypass (6, 10, 17) is deflected from the straight lined transport line, wherein the sub-path comprising the scale continues straight.

12. Apparatus according to claim 11,
**characterized in**
**that** the ground plate is identical and arranged rotated by 180°, so that a postal item can be guided straight lined from bypass to bypass.

## Revendications

1. Dispositif pour le traitement d'envois postaux (18), en particulier d'envois de lettres, qui sont transportés sur un tronçon de transport (1) dans un flux d'envois, le dispositif comprenant un système de pesée (7, 16) accessible par le tronçon de transport (1), le système de pesée (7, 16) présentant un dispositif répartiteur (4, 14), qui répartit le flux des envois postaux en chemins partiels (5, 6), les chemin partiels (5, 6) étant guidés à nouveau ensemble après une pesée d'envois postaux par la suite par l'intermédiaire d'un dispositif de rassemblement (8, 15) ,
**caractérisé en ce que**
une balance (7, 16) est prévue dans un premier des chemins partiels (5) pour la détermination automatique du poids des envois postaux (18),
**en ce qu'**un second chemin partiel est conçu sous forme de dérivation (6, 10, 17), qui contourne la balance (7, 16), aucune pesée n'ayant lieu dans la dérivation (6, 10, 17).

2. Dispositif selon la revendication 1, **caractérisé en ce que** le chemin partiel (5) doté de la balance (7, 16) est dévié latéralement du tronçon de transport (1) agencé en ligne droite, alors que la dérivation (6, 10, 17) continue tout droit.

3. Dispositif selon la revendication 1 ou 2 **caractérisé en ce que** le chemin partiel (5) doté de la balance (7, 16) et la dérivation (6, 10, 17) ont la même longueur.

4. Dispositif selon l'une des revendications précédentes, **caractérisé par** des moyens, en particulier des courroies de guidage (20) avec lesquelles les envois postaux sont transportés sur une arête debout sur le tronçon de transport (1).

5. Dispositif selon l'une des revendications précédentes, **caractérisé en ce qu'**un second dispositif répartiteur (4, 14), qui répartit le flux des envois postaux à son tour entre un chemin partiel avec une seconde balance (7, 16) et une seconde dérivation (6, 10, 17), se trouve dans la section de transport dans le sens du flux en aval du dispositif de rassemblement (8, 15).

6. Dispositif selon la revendication 5, **caractérisé par** des moyens de commande pour l'actionnement du dispositif répartiteur, afin d'amener les envois postaux, pesés au moyen du premier dispositif de pesée à la seconde dérivation (6, 10, 17).

7. Dispositif selon l'une des revendications précédentes, **caractérisé par** des courroies de guidage entraînées par des entraînements, entre lesquels les envois postaux, en particulier les envois de lettres, sont déplacés et bloqués, debout sur une arête, sur le tronçon de transport et les chemins partiels se trouvant dedans.

8. Dispositif selon l'une des revendications précédentes, **caractérisé en ce que** les entraînements sont commutés de telle sorte que deux chemins partiels (9, 10) parallèles sont parcourus dans le même temps.

9. Dispositif selon l'une des revendications précédentes, **caractérisé par** un module de pesée, qui comprend le premier chemin partiel (5, 9), le second chemin partiel et un agencement de courroies de guidage, qui permet un montage en série de deux modules de pesée identiques.

10. Dispositif selon la revendication 9, **caractérisé par** un dispositif répartiteur (14) se trouvant directement au début de la section de transport réalisée sur le module de pesée et un dispositif de rassemblement (15) se trouvant directement sur l'extrémité de la section de transport réalisée sur le module de pesée.

11. Dispositif selon la revendication 10, **caractérisé en ce que** la dérivation (6, 10, 17) est déviée de la section de transport agencée en ligne droite, alors que le chemin partiel doté de balance continue tout droit.

12. Dispositif selon la revendication 11, **caractérisé en ce que** la plaque de base est identique et disposée tourné de 180°, de sorte qu'un envoi postal peut être guidé en ligne droite de dérivation à dérivation.
